# FASCICULE DE BREVET EUROPEEN

(11) **EP 2 817 178 B1**
(45) Date de publication et mention de la délivrance du brevet: **18.01.2017**
(21) Numéro de dépôt: 13706640.3
(22) Date de dépôt: 06.02.2013
(51) Int. Cl.: B62D 25/04, B60R 22/24

(54) **PIECE DE FIXATION ET OU DE RENFORT D'ANCRAGE DE CEINTURE DE SECURITE DE VEHICULE.**
BEFESTIGUNGSTEIL UND ODER VERANKERUNGSVERSTÄRKUNG EINES SICHERHEITSGURTES EINES FAHRZEUGS
FIXING AND/OR REINFORCING PART FOR ANCHORING A SAFETY BELT OF A VEHICLE

(30) Priorité: 22.02.2012 FR 1251630
(43) Date de publication de la demande: 31.12.2014
(73) Titulaire: Peugeot Citroën Automobiles SA, 78140 Vélizy Villacoublay (FR)
(72) Inventeur: BOUILLON, Maxime, F-94550 Chevilly Larue (FR)
(86) Numéro de dépôt international: PCT/FR2013/050248
(87) Numéro de publication internationale: WO 2013/124565

(56) Documents cités:
- FR-A1- 2 932 752
- US-A1- 2006 001 253
- US-A1- 2011 254 317
- US-B1- 6 773 048

## Description

L'invention a trait à une pièce de fixation et/ou de renfort d'ancrage de ceinture de sécurité d'un véhicule. Plus particulièrement, l'invention a trait à une pièce de fixation et/ou de renfort d'ancrage de ceinture de sécurité de véhicule destinée à être fixée à une doublure de custode en tôle. L'invention a également trait à un véhicule équipé d'une telle pièce de fixation et/ou de renfort.

Afin de retenir les passagers lors d'une collision, les véhicules sont équipés de ceintures de sécurité. Elles doivent éviter que les passagers soient projetés en avant contre des obstacles, et se blessent. Elles évitent également que les passagers arrière ne heurtent les passagers avant. Pour cela, les ceintures doivent être ancrées en des points de fixation stables de la structure du véhicule. Sur certains modèles de véhicules, un de ces points d'ancrage peut être implanté au niveau d'une custode. La custode est la partie d'une carrosserie automobile située latéralement, à l'aplomb des roues arrière, entre le toit et la ligne de ceinture. La fixation matérielle s'effectue généralement sur une doublure intérieure d'une tôle de carrosserie extérieure du véhicule.

Or cette doublure est couramment une tôle de faible épaisseur dont la rigidité et la résistance ne suffisent pas à procurer un ancrage ferme. Dans l'éventualité d'une collision, les efforts transmis par l'ancrage de ceinture peuvent déformer la tôle servant de zone de fixation. L'ancrage de ceinture peut alors se déplacer vers l'avant, et le passager y étant retenu subit une course non maîtrisée. Pour protéger les usagers, les normes de sécurité actuelles imposent des déplacements maximaux que doivent respecter les points d'ancrage de ceintures. Ces déplacements sont prescrits pour des collisions à grande vitesse, par exemple à plus de 64 km/h.

Pour réduire les déformations de certaines tôles formant la caisse d'un véhicule, des renforts peuvent être ajoutés.

Le document DE 10 2009 014 366 A1 présente une structure latérale inférieure de véhicule. Cette structure comprend un habillage de passage de roue, un premier support s'élevant depuis le passage de roue, un deuxième support d'enrouleur de ceinture de sécurité et un élément déformable. L'élément déformable présente plusieurs courbures et relie le premier support au deuxième support, sa fixation s'effectue par vis. L'élément déformable comprend à une extrémité une ailette inclinée qui s'insère dans une fente afin de créer un blocage en rotation. Cet élément déformable permet d'améliorer le comportement du véhicule en cas de collision puisque sa déformation permet d'absorber une partie de l'énergie de la collision. Son rôle permet de limiter les déformations subies par la structure latérale inférieure du véhicule. Cependant, en raison de ses diverses courbures et de sa longueur, l'élément déformable présente une rigidité réduite. En cas de choc, il ne limitera que de manière réduite sa propre déformation ou celles des supports sur lesquels il est monté. Un ancrage de ceinture fixé sur cet élément déformable ne sera pas suffisamment immobilisé pour des chocs à grande vitesse.

Le document US 6,086,100 présente un appareil pour transférer les charges d'une ceinture de sécurité arrière à un châssis de véhicule. L'appareil comprend un élément de renfort unitaire fixé au pilier C du châssis véhicule. L'élément de renfort comprend une partie supérieure à laquelle vient se fixer une boucle de renvoi de ceinture, et une partie inférieure sur laquelle se monte l'enrouleur. Depuis la partie inférieure s'étend une partie latérale. L'élément de renfort est fixé sur le châssis au niveau d'un élément de carrosserie intérieur, et la partie latérale se fixe à proximité immédiate d'une tour d'appui liée à une traverse. Cette architecture permet de transmettre des efforts depuis la boucle de renvoi jusqu'au châssis du véhicule en maîtrisant les déformations. Or cette solution reste lourde en raison de la taille de l'élément de renfort qui relie à la fois la boucle de renvoi et l'enrouleur. Le besoin de la tour d'appui pour la fixation alourdit encore le véhicule. Cette solution est inadaptée à une fixation sur une doublure en tôle fine, tant l'action de l'élément de renfort risquerait de la déformer en cas de choc. Dans le cas où la caisse doit participer à absorber l'énergie du choc, la présence de l'élément de renfort peut perturber une bonne absorption de l'énergie. Il peut également provoquer une déformation prématurée de l'habitacle et réduire sa capacité à protéger les occupants.

Le document JP2011-25849 A décrit un pièce de fixation/ou de renfort pour un moyen d'ancrage de ceinture de sécurité à la custode d'un véhicule sélon la préambule de la revendication 1.

L'invention a pour objectif de résoudre au moins un des problèmes rencontrés dans l'art antérieur. Plus particulièrement, l'invention a pour objectif de réduire la déformation d'une doublure en tôle soumise à l'action d'un ancrage de ceinture de sécurité qui y est fixé, et ce de manière simple, économique et/ou soucieuse du poids du véhicule.

L'invention a pour objet une pièce de fixation et/ou de renfort pour un moyen d'ancrage de ceinture de sécurité à la custode d'un véhicule, la pièce formant une plaque présentant une direction principale avec deux extrémités principales opposées et comprenant un orifice destiné à être traversé par le moyen d'ancrage, remarquable en ce qu'une des extrémités principales de la plaque forme un ressaut avec un bord de fixation préférentiellement généralement plan, de manière à ce que la pièce puisse être superposée à une doublure de la custode en ayant son bord de fixation dans une feuillure de jonction de la doublure avec une tôle de carrosserie extérieure correspondante.

Suivant un mode avantageux de l'invention, la feuillure de jonction peut longer une ouverture destinée à recevoir un ouvrant, une vitre ou un gousset.

Suivant un autre mode avantageux de l'invention, la pièce comprend des premiers moyens raidisseurs au niveau de l'orifice, lesdits moyens comprenant préférentiellement un bossage, plus préférentiellement un embouti, s'étendant au moins partiellement autour de l'orifice.

Suivant un encore autre mode avantageux de l'invention, la pièce comprend des deuxièmes moyens raidisseurs s'étendant au moins essentiellement selon la direction principale entre l'orifice et le ressaut, lesdits moyens comprenant préférentiellement au moins un bossage, plus préférentiellement au moins un embouti.

Suivant un encore autre mode avantageux de l'invention, la pièce s'étend également transversalement à la direction principale à hauteur de l'orifice, selon une direction transversale formant un angle de moins de 20° avec la perpendiculaire à la direction principale, l'orifice étant préférentiellement situé sur une portion de la plaque correspondant au premier tiers de sa longueur en partant de l'extrémité principale opposée au bord de fixation.

Suivant un encore autre mode avantageux de l'invention, la pièce de fixation et/ou de renfort est d'un seul tenant, préférentiellement venue de la même matière.

Suivant un encore autre mode avantageux de l'invention, la pièce de fixation est réalisée en métal, préférentiellement en acier.

L'invention a également pour objet un véhicule avec une custode, comprenant au niveau de ladite custode une pièce de fixation et/ou de renfort pour un moyen d'ancrage de ceinture de sécurité, remarquable en ce que ladite pièce est conforme à l'invention.

Suivant un mode avantageux de l'invention, la longueur de la pièce de fixation et/ou de renfort mesurée suivant sa direction principale représente plus de 30% de la longueur de la custode mesuré suivant l'axe longitudinal du véhicule ; préférentiellement plus de 50%, encore plus préférentiellement plus de 70 %.

Suivant un mode avantageux de l'invention, le bord de fixation est positionné en avant par rapport à l'orifice.

Suivant un autre mode avantageux de l'invention, la pièce de fixation et/ou de renfort épouse la surface de la doublure.

Suivant un encore autre mode avantageux de l'invention, la doublure forme un ressaut au niveau de la feuillure, dont une partie s'étend suivant un plan frontal du véhicule, la pièce venant en appui contre le plan frontal. Le plan frontal s'étend essentiellement suivant l'axe transversal et l'axe vertical du véhicule.

Suivant un encore autre mode avantageux de l'invention, la doublure présente un ajour disposé en vis-à-vis de l'orifice.

Suivant un encore autre mode avantageux de l'invention, la doublure et la tôle de carrosserie extérieure correspondante sont jointives au niveau de leurs bords avant respectifs formant la feuillure, la pièce de fixation et/ou de renfort épousant la doublure avec le bord de fixation intercalé dans la feuillure et fixé par soudure à la feuillure.

Suivant un encore autre mode avantageux de l'invention, la direction principale de la pièce de fixation et/ou de renfort est orientée essentiellement suivant l'axe longitudinal du véhicule, la direction principale et l'axe longitudinal du véhicule formant préférentiellement un angle inférieur à 45°, plus préférentiellement inférieur à 30°, encore plus préférentiellement inférieur à 20°.

Suivant un encore autre mode avantageux de l'invention, la doublure de custode comprend une première tôle, préférentiellement supérieure, et une deuxième tôle, préférentiellement inférieure, qui sont jointives, la pièce de fixation et/ou de renfort s'étend de part et d'autres de la jonction et est fixée, préférentiellement par soudure, à chacune des première et deuxième tôles.

Suivant un encore autre mode avantageux de l'invention, le véhicule comprend un premier renfort s'étendant majoritairement verticalement entre la doublure de custode et la carrosserie extérieure, transversalement à la pièce de fixation et/ou de renfort, préférentiellement à hauteur de l'orifice; le premier renfort, la pièce et la doublure étant assemblés par soudure électrique, la soudure électrique étant préférentiellement réalisée sur les trois épaisseurs formées par la superposition du premier renfort, de la pièce et de la doublure.

Suivant un encore autre mode avantageux de l'invention, le premier renfort a une forme générale de cornière cintrée.

Suivant un encore autre mode avantageux de l'invention, le véhicule comprend un deuxième renfort s'étendant essentiellement diagonalement et relié au premier renfort à hauteur de la pièce de fixation et/ou de renfort, le premier renfort, le deuxième renfort et la pièce étant assemblés par soudure électrique, la soudure électrique étant préférentiellement réalisée sur les trois épaisseurs formées par la superposition du premier renfort, du deuxième renfort et de la pièce.

Suivant un encore autre mode avantageux de l'invention, l'ajour englobe au moins une partie de la pièce où la première et la deuxième doublure se chevauchent.

Suivant un encore autre mode avantageux de l'invention, le premier renfort, le deuxième renfort et la pièce de fixation et/ou de renfort sont réalisés en un métal de même nature et sont assemblés à l'aide d'au moins un point de soudure situé dans l'emprise de l'ajour.

L'invention offre l'avantage de proposer une pièce de fixation et/ou de renfort qui permet de matérialiser un point stable pour l'implantation d'un ancrage de ceinture de sécurité. La pièce permet de venir chercher un appui sur la feuillure commune à la doublure et la tôle de carrosserie extérieure puisque la feuillure forme une zone rigide pouvant servir de support. L'ajout de la pièce de fixation et/ou de renfort permet d'épaissir localement la doublure et par la même de la rigidifier efficacement. La doublure est renforcée localement en limitant l'ajout de poids. La pièce de fixation et/ou de renfort permet de répartir sur une surface étendue les efforts sur la doublure bien qu'à la base le moyen d'ancrage exerce une sollicitation ponctuelle.

La pièce de fixation et/ou de renfort présente une direction d'allongement qui est orientée suivant l'axe longitudinal du véhicule. Cette orientation permet de favoriser une transmission d'efforts dans la pièce dans l'éventualité d'une collision frontale du véhicule.

La pièce est reliée aux différents renforts présents dans la custode, elle partage leurs points de soudure afin former un noeud rigide. L'étendue de la pièce permet en outre de renforcer la jonction entre les deux doublures. Les risques d'arrachement et de déboutonnage des points de soudure autour de la pièce sont réduits. La pièce matérialise un point d'accroche ferme, compatible avec la stabilité attendue pour un renvoi de ceinture de sécurité en cas de choc à grande vitesse.

D'autres caractéristiques et avantages de la présente invention seront mieux compris à l'aide de la description donnée à titre d'exemple et en référence aux dessins parmi lesquels :
- La figure 1 représente une caisse de véhicule avec une custode et un agrandissement au niveau de la custode comprenant une pièce de fixation et/ou de renfort selon l'invention.
- La figure 2 est une illustration de la pièce de fixation et/ou de renfort de la figure 1.

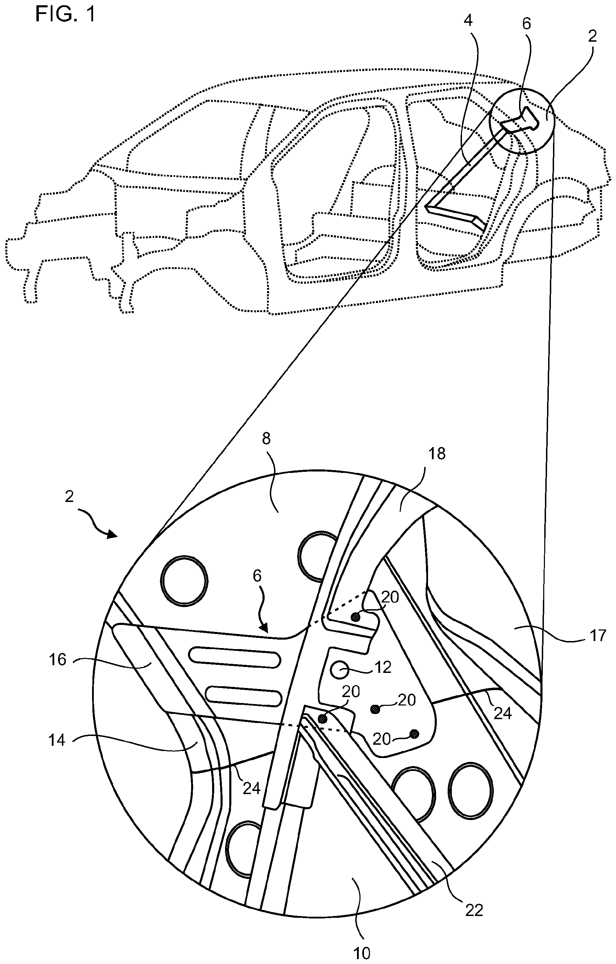

La figure 1 représente une vue isométrique de la caisse d'un véhicule dont la carrosserie présente une custode 2. La custode 2 forme un panneau latéral supérieur. Cette custode 2 peut être située à l'aplomb des roues arrière et peut remonter jusqu'au toit dudit véhicule. Cette caisse de véhicule est configurée pour comprendre plusieurs rangées de sièges dont une rangée arrière. Le véhicule peut comprendre une ou plusieurs rangées arrière.

Les sièges du véhicule sont munis de ceintures de sécurité. Une ceinture de sécurité 4 est représentée au niveau du siège arrière gauche. La ceinture de sécurité 4 qui est ici représentée est en configuration déroulée apte à retenir un passager, sa boucle verrouillable étant engagée dans une fixation située vers l'intérieur du véhicule. La boucle que forme la ceinture de sécurité 4 est imposée par ses points d'ancrage dont un est implanté au niveau de la custode 2 de la caisse.

La custode 2 comprend une tôle de carrosserie extérieure et une doublure de cette tôle de carrosserie extérieure. Depuis l'extérieur du véhicule, la doublure est essentiellement cachée puisqu'elle est recouverte par la tôle de carrosserie extérieure. Inversement, depuis l'intérieur du véhicule et en l'absence d'habillage, la doublure est majoritairement visible. Préférentiellement, la tôle de carrosserie extérieure et la doublure sont deux tôles métalliques, par exemple en acier ou en aluminium.

La doublure et la tôle de carrosserie extérieure sont assemblées au niveau de bords de montage dont les surfaces s'épousent sur une certaine longueur de manière à former une feuillure de jonction. La feuillure de jonction peut être une feuillure délimitant un ouvrant, une vitre ou un gousset. L'ouvrant correspondant peut être une porte arrière ou un volet de coffre. La doublure peut former des feuillures avec d'autres tôles de la caisse du véhicule. La doublure peut être reliée à une gouttière située au niveau du volet de coffre.

L'assemblage de la feuillure devient effectif après une opération de soudage, de collage ou de clinchage. Préférentiellement, l'assemblage est effectué par soudure électrique par points, ce type de soudure permettant d'effectuer une soudure sur trois tôles superposées.

La ceinture de sécurité 4 est reliée à la custode 2 par un moyen d'ancrage tel une vis engagée dans un écrou. Ce moyen d'ancrage transmet des contraintes ponctuelles à la custode. Pour modifier le contact entre le moyen d'ancrage et la custode 2, une pièce 6 de fixation et/ou de renfort est intercalée à leur interface. Le moyen d'ancrage exerce principalement des efforts de traction vers l'intérieur du véhicule tendant à plaquer la pièce 6 de fixation et/ou de renfort contre la doublure.

La figure 1 comporte un agrandissement centré sur la custode 2 du véhicule. Ici, la tôle de carrosserie extérieure n'est pas représentée afin de pourvoir visualiser la doublure et la pièce 6 de fixation et/ou de renfort depuis l'extérieur.

La pièce 6 de fixation et/ou de renfort est superposée sur la doublure. Elle forme une plaque dont l'épaisseur s'ajoute à celle de la doublure, ce qui favorise une rigidification de la superposition. La pièce 6 de fixation et/ou de renfort épouse la surface de la doublure qui est dirigée vers la carrosserie extérieure, à cet effet, elle peut être courbe et/ou bombée.

La pièce 6 de fixation et/ou de renfort est soudée sur la doublure, par exemple à l'aide de soudures par points. Puisque l'empilement comprend depuis l'extérieur vers l'intérieur l'écrou du moyen d'ancrage, la pièce 6 puis la doublure, les efforts transmis par la ceinture génèrent une composante principale en compression dans les points de soudure. Ce mode de sollicitation est peu contraignant pour eux. Cette configuration limite leur risque d'arrachement et une décohésion de la superposition.

La pièce 6 de fixation et/ou de renfort comprend un orifice 12 dans lequel s'insère le moyen d'ancrage du renvoi de la ceinture de sécurité 4. La doublure comprend également un ajour communiquant avec l'orifice 12 afin de permettre le passage du moyen d'ancrage.

La pièce 6 de fixation et/ou de renfort s'étend suivant au moins une direction principale. La surface de la pièce 6 de fixation et/ou de renfort est supérieure à 100 cm², préférentiellement supérieure à 300 cm². Sa surface est supérieure à celle d'une simple rondelle intercalée entre l'écrou et la doublure. De la sorte, la surface d'appui est augmentée. Les efforts émanant du moyen d'ancrage sont transmis sur une zone étendue, de manière à réduire les concentrations de contraintes dans la doublure. L'ampleur des déformations plastiques que peut subir le matériau de la doublure est diminuée.

La pièce 6 de fixation et/ou de renfort est une plaque essentiellement rigide. L'épaisseur de la pièce 6 de fixation et/ou de renfort est comprise entre 0,50 mm et 5,00 mm ; préférentiellement comprise entre 1,00 mm et 2,50 mm. Préférentiellement l'épaisseur de la pièce est supérieure à celle de la doublure sur laquelle elle repose. Son épaisseur permet de rigidifier localement la doublure.

On aura bien compris que grâce à sa surface et à son épaisseur, la pièce 6 limite les déformations subies par la doublure en cas de collision. La pièce 6 permet de blinder localement la doublure. Pour une collision se produisant à une vitesse donnée, la course du moyen d'ancrage sera réduite. Le point d'accroche qu'il forme contribue à une meilleure sécurité passive pour le passager qui y est retenu.

La pièce 6 de fixation et/ou de renfort présente une direction principale d'allongement et deux extrémités principales. Une des extrémités principales se prolonge jusqu'à une feuillure de jonction 14 de la doublure. La pièce 6 de fixation et/ou de renfort comprend un bord de fixation 16. Il est situé au niveau d'une des deux extrémités principales.

La doublure est liée à plusieurs tôles de la caisse au travers de différentes feuillures. Les variations géométriques de la caisse peuvent rendre inutilisable certaines de ces feuillures, par exemple la feuillure formée avec la gouttière. À l'opposé, la feuillure délimitant le passage de la porte arrière présente une précision géométrique soignée. Cette feuillure est compatible avec la précision requise pour la fixation de la pièce 6 de fixation et/ou de renfort. Pour cette raison, le bord de fixation 16 de la pièce 6 de fixation et/ou de renfort est fixé à la feuillure de jonction 14 délimitant l'ouvrant, bien qu'elle soit située en avant et qu'elle ne soit pas forcément la plus proche. Le bord de fixation 16 s'insère donc entre les bords de la doublure et de la tôle de carrosserie extérieure. La feuillure de jonction 14 matérialise une zone support contre laquelle la pièce vient s'appuyer.

Une feuillure reliant la doublure à une gouttière 17 peut être située en arrière de l'orifice 12. S'y fixer permettrait de faire travailler la pièce 6 en traction. En raison des dispersions géométriques liées à la gouttière, une feuillure de jonction située en avant peut être privilégiée. La feuillure de la gouttière peut être plus proche de l'orifice 12 et faire économiser de la matière. Toujours en raison des dispersions géométriques, une feuillure de jonction plus éloignée peut être privilégiée.

Avantageusement, la fixation de la pièce 6 de fixation et/ou de renfort dans la feuillure s'effectue à l'aide du même procédé d'assemblage utilisé pour joindre la doublure et la tôle extérieure. De la sorte, la pièce est solidaire de la feuillure et fait corps avec la doublure. Cette particularité permet d'augmenter la capacité de la pièce 6 de fixation et/ou de renfort à transmettre des efforts à la doublure, notamment des efforts survenant lors d'une collision à grande vitesse. La feuillure de jonction 14 est localement épaissie afin d'accueillir localement l'épaisseur de la pièce 6 de fixation et/ou de renfort.

La pièce 6 de fixation et/ou de renfort est essentiellement orientée suivant l'axe longitudinal du véhicule, elle peut présenter une inclinaison par rapport à l'axe longitudinal de moins de 30°. Avantageusement, l'orifice est à hauteur du bord de fixation 16. Cette orientation permet de favoriser une transmission d'efforts entre l'orifice 12 et le bord de fixation 16 en limitant le pivotement de la pièce ainsi que sa flexion.

La custode 2 comprend un premier renfort 18 s'étendant essentiellement verticalement. Le premier renfort 18 est placé en regard de la tôle de carrosserie extérieure, ces deux éléments peuvent être liés à l'aide de colle ou de mastic. Le premier renfort 18 a une forme allongée. Il peut comprendre un profilé tel une cornière. Le premier renfort 18 longe la face extérieure de la doublure. Une de ses faces est soudée à la doublure, par exemple par points 20. Le premier renfort 18 traverse la pièce 6 de fixation et/ou de renfort, et y est soudé par points. Préférentiellement, les points de soudure 20 s'étendent à une troisième épaisseur, par exemple la doublure.

La custode 2 comprend également un deuxième renfort 22 s'étendant essentiellement en diagonale. Sa surface épouse celle de la doublure. Il est placé entre la tôle de carrosserie extérieure et la doublure. Il peut comprendre un profilé tel une cornière. Suivant un mode avantageux de l'invention, le premier renfort 18 et le deuxième renfort 22 sont jointifs au niveau de la pièce 6 de fixation et/ou de renfort. Préférentiellement, la pièce 6, les premier et deuxième renforts (18, 22) forment un empilement au niveau de l'ajour de la doublure de manière à pouvoir être soudés à l'aide de points de soudure 20 trois épaisseurs.

La doublure comprend une première tôle 8 formant la partie supérieure de la doublure, et une deuxième tôle 10 formant la partie inférieure de la doublure. Les première et deuxième tôles (8, 10) sont jointives au niveau d'une jonction 24. Elles peuvent se chevaucher ou venir bord à bord. La pièce 6 de fixation et/ou de renfort s'étend de part et d'autres de la jonction 24, préférentiellement la pièce 6 s'étend au-delà d'une éventuelle zone de chevauchement des doublures. La pièce 6 est soudée de part d'autres de la jonction 24. Ce mode de fixation permet également de renforcer la jonction et d'éviter un arrachement de leurs moyens d'assemblage. En effet, lorsqu'un moyen d'ancrage exerce une contrainte sur l'une des doublures, un arrachement peut se produire à la jonction entre les doublures.

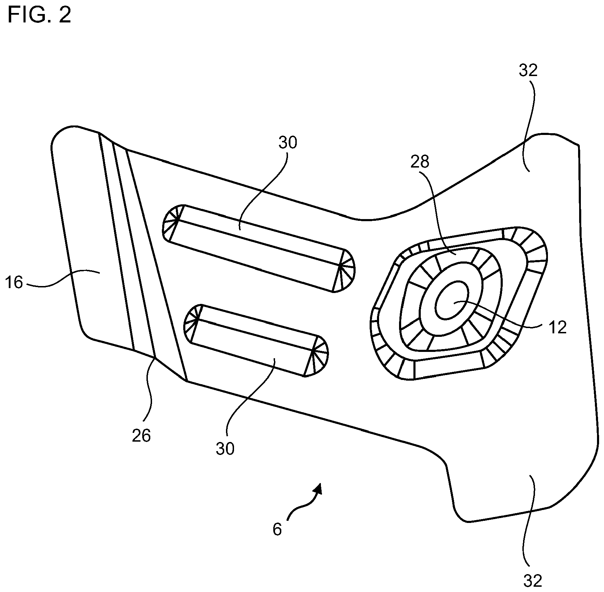

La figure 2 schématise la pièce 6 de fixation et/ou de renfort vue en plan. L'extrémité principale en contact de la feuillure présente un ressaut 26. Le ressaut 26 délimite le bord de fixation 16 du reste de la plaque, et en particulier de la portion comprenant l'orifice 12. Le bord de fixation 16 est essentiellement plan. Le bord de fixation 16 est essentiellement parallèle à la forme de la plaque de la pièce. Il a une forme générale de rectangle et présente un allongement. Cet allongement est incliné par rapport à la direction principale. La surface et le contour du bord de fixation 16 sont agencés de manière à épouser les surfaces intérieures de la feuillure de jonction 14.

L'orifice 12 est à distance du milieu de la pièce déterminé par rapport à la direction principale. Préférentiellement, l'orifice 12 est situé au niveau d'un des tiers latéral. L'orifice est situé à l'opposé du ressaut 26.

La pièce 6 de fixation et/ou de renfort comprend des premiers moyens raidisseurs 28 autour de l'orifice 12. Les premiers moyens raidisseurs 28 peuvent être un bossage formé autour de l'orifice 12 et à l'intérieur de l'ajour de la doublure. Les premiers moyens raidisseurs 28 peuvent contenir les déformations provoquées par le moyen d'ancrage de la ceinture de sécurité 4. Ils permettent d'éviter une déformation de la doublure.

Puisque le bord de fixation 16 de la pièce est positionné devant l'orifice 12, la pièce 6 travaillera en compression suivant sa direction principale en cas de choc transmis par le moyen d'ancrage. Puisque la pièce est courbée, cette sollicitation tendra à la courber d'avantage. Pour parer à cette flexion, la pièce 6 de fixation et/ou de renfort comprend des deuxièmes moyens raidisseurs 30. Les moyens raidisseurs peuvent être des nervures ou des bossages réalisés par emboutissage de la pièce. Les deuxièmes moyens raidisseurs s'étendent essentiellement entre le ressaut 26 et l'orifice 12. Ils s'étendent suivant la direction principale. De la sorte, ils augmentent la rigidité en flexion de la pièce 6.

La pièce 6 de fixation et/ou de renfort s'étend également transversalement par rapport à la direction principale. La pièce 6 comprend au moins une excroissance 32 s'étendant transversalement à la direction principale. Au moins une excroissance est positionnée au niveau de l'orifice 12 et/ou est positionnée à l'opposé du ressaut 26. Au moins une excroissance s'étend suivant un axe transversal à la direction principale. Préférentiellement, l'axe transversal et la direction principale forment un angle inférieur à 45 °, préférentiellement inférieur à 30°. Avantageusement, la pièce comprend au moins deux excroissances opposées de manière à ce que la pièce ait une forme de « T ».

La feuillure de jonction 14 forme une marche. Le ressaut 26 est configuré pour épouser la forme de la marche et venir en appui au niveau d'une surface de butée essentiellement perpendiculaire à la direction longitudinale du véhicule. Avantageusement la surface de butée est généralement plane. En cas de choc frontal, la marche conjuguée au ressaut permet de bloquer la pièce en translation suivant l'axe longitudinal du véhicule.

## Revendications

1. Pièce (6) de fixation et/ou de renfort pour un moyen d'ancrage de ceinture de sécurité (4) à la custode (2) d'un véhicule, la pièce (6) formant une plaque présentant une direction principale avec deux extrémités principales opposées et comprenant un orifice (12) destiné à être traversé par le moyen d'ancrage, une des extrémités principales de la plaque forme un ressaut (26) avec un bord de fixation (16) préférentiellement généralement plan, de manière à ce que la pièce (6) puisse être superposée à une doublure de la custode (2) en ayant son bord de fixation (16) dans une feuillure de jonction (14) de la doublure avec une tôle de carrosserie extérieure correspondante, **caractérisée en ce qu'**elle comprend des premiers moyens raidisseurs (28) au niveau de l'orifice et des deuxièmes moyens raidisseurs (30), lesdits deuxièmes moyens raidisseurs (30) s'étendant au moins essentiellement selon la direction principale entre l'orifice (12) et le ressaut (26), lesdits moyens comprenant préférentiellement au moins un bossage, plus préférentiellement au moins un embouti.

2. Pièce (6) selon la revendication 1, **caractérisée en ce que** les premiers moyens raidisseurs (28) au niveau de l'orifice comprennent préférentiellement un bossage, plus préférentiellement un embouti, s'étendant au moins partiellement autour de l'orifice (12).

3. Pièce (6) selon l'une des revendications 1 ou 2, **caractérisée en ce qu'**elle s'étend également transversalement à la direction principale à hauteur de l'orifice (12), selon une direction transversale formant un angle de moins de 20° avec la perpendiculaire à la direction principale, l'orifice (12) étant préférentiellement situé sur une portion de la plaque correspondant au premier tiers de sa longueur en partant de l'extrémité principale opposée au bord de fixation (16).

4. Véhicule avec une custode (2), comprenant au niveau de ladite custode (2) une pièce (6) de fixation et/ou de renfort pour un moyen d'ancrage de ceinture de sécurité (4), **caractérisé en ce que** ladite pièce (6) est conforme à l'une des revendications 1 à 3.

5. Véhicule selon la revendication 4, **caractérisé en ce que** la doublure et la tôle de carrosserie extérieure correspondante sont jointives au niveau de leurs bords avant respectifs formant la feuillure (14), la pièce (6) de fixation et/ou de renfort épousant la doublure avec le bord de fixation intercalé dans la feuillure et fixé par soudure à la feuillure.

6. Véhicule selon l'une des revendications 4 et 5, **caractérisé en ce que** la direction principale de la pièce (6) de fixation et/ou de renfort est orientée essentiellement suivant l'axe longitudinal du véhicule, la direction principale et l'axe longitudinal du véhicule formant préférentiellement un angle inférieur à 45°, plus préférentiellement inférieur à 30°, encore plus préférentiellement inférieur à 20°.

7. Véhicule selon l'une des revendications 4 à 6, **caractérisé en ce que** la doublure de custode comprend une première tôle (8), préférentiellement supérieure, et une deuxième tôle (10), préférentiellement inférieure, qui sont jointives, la pièce (6) de fixation et/ou de renfort s'étend de part et d'autre de la jonction (24) et est fixée, préférentiellement par soudure, à chacune des première et deuxième tôles (8, 10).

8. Véhicule selon l'une des revendications 4 à 7, **caractérisé en ce qu'**il comprend un premier renfort (18) s'étendant majoritairement verticalement entre la doublure de custode et la carrosserie extérieure, transversalement à la pièce (6) de fixation et/ou de renfort, préférentiellement à hauteur de l'orifice (12) ; le premier renfort (18), la pièce (6) et la doublure étant assemblés par soudure électrique, la soudure électrique étant préférentiellement réalisée sur les trois épaisseurs formées par la superposition du premier renfort (18), de la pièce (6) et de la doublure.

9. Véhicule selon la revendication 8, **caractérisé en ce qu'**il comprend un deuxième renfort (22) s'étendant essentiellement diagonalement et relié au premier renfort (18) à hauteur de la pièce (6) de fixation et/ou de renfort, le premier renfort (18), le deuxième renfort (22) et la pièce (6) étant assemblés par soudure électrique, la soudure électrique étant préférentiellement réalisée sur les trois épaisseurs formées par la superposition du premier renfort, du deuxième renfort et de la pièce.

## Patentansprüche

1. Befestigungsteil (6) und/oder Verstärkung für ein Verankerungsmittel eines Sicherheitsgurts (4) an dem Karosserieteil (2) über dem Hinterrad eines Fahrzeugs, wobei das Teil (6) eine Platte bildet, die eine Hauptrichtung mit zwei einander entgegengesetzten Hauptenden aufweist und eine Öffnung (12) umfasst, die dazu bestimmt ist, von dem Verankerungsmittel durchquert zu werden, wobei eines der Hauptenden der Platte eine Auskragung (26) mit einem Befestigungsrand (16) bevorzugt im Allgemeinen eben bildet, so dass das Teil (6) einer Auskleidung des Karosserieteils (2) überlagert werden kann, indem es seinen Befestigungsrahmen (16) in einem Verbindungsfalz (14) der Auskleidung mit einem entsprechenden Blech der äußeren Karosserie hat, **dadurch gekennzeichnet, dass** es erste Versteifungsmittel (28) im Bereich der Öffnung umfasst, und zweite Versteifungsmittel (30), wobei sich die zweiten Versteifungsmittel (30) mindestens im Wesentlichen entlang der Hauptrichtung zwischen der Öffnung (12) und der Auskragung (26) erstrecken, wobei die Mittel bevorzugt mindestens einen Höcker, noch bevorzugter mindestens eine Stülpung umfassen.

2. Teil (6) nach Anspruch 1, **dadurch gekennzeichnet, dass** die ersten Versteifungsmittel (28) im Bereich der Öffnung bevorzugt einen Höcker, bevorzugter eine Stülpung umfassen, der/die sich mindestens teilweise um die Öffnung (12) erstreckt.

3. Teil (6) nach einem der Ansprüche 1 oder 2, **dadurch gekennzeichnet, dass** es sich auch quer zu der Hauptrichtung in der Höhe der Öffnung (12) entlang einer Querrichtung erstreckt, die einen Winkel von weniger als 20° mit der Senkrechten zu der Hauptrichtung bildet, wobei die Öffnung (12) bevorzugt auf einem Abschnitt der Platte liegt, der dem ersten Drittel ihrer Länge ausgehend von dem Hauptende, das dem Befestigungsrand (16) gegenüberliegt, entspricht.

4. Fahrzeug mit einem Karosserieteil (2) über dem Hinterrad, das im Bereich des Karosserieteils (2) über dem Hinterrad ein Befestigungsteil (6) und/oder Verstärkungsteil für ein Verankerungsmittel eines Sicherheitsgurts (4) umfasst, **dadurch gekennzeichnet, dass** das Teil (6) einem der Ansprüche 1 bis 3 entspricht.

5. Fahrzeug nach Anspruch 4, **dadurch gekennzeichnet, dass** die Auskleidung und das entsprechende äußere Karosserieblech im Bereich ihrer jeweiligen Vorderränder, die den Falz (14) bilden, aneinander stoßen, wobei sich das Befestigungsteil (6) und/oder Verstärkungsteil an die Auskleidung mit dem Befestigungsrand, der in den Falz eingefügt und durch Schweißen an dem Falz befestigt ist, schmiegt.

6. Fahrzeug nach einem der Ansprüche 4 und 5, **dadurch gekennzeichnet, dass** die Hauptrichtung des Befestigungsteils (6) und/oder Verstärkungsteils im Wesentlichen entlang der Längsachse des Fahrzeugs ausgerichtet ist, wobei die Hauptrichtung und die Längsachse des Fahrzeugs bevorzugt einen Winkel kleiner als 45°, bevorzugter kleiner als 30°, bevorzugter kleiner als 20° bilden.

7. Fahrzeug nach einem der Ansprüche 4 bis 6, **dadurch gekennzeichnet, dass** die Auskleidung des Karosserieteils über dem Hinterrad ein erstes Blech (8), bevorzugt ein oberes, und ein zweites Blech (10), bevorzugt ein unteres, umfasst, die aneinander stoßen, wobei sich das Befestigungsteil (6) und/oder Verstärkungsteil auf jeder Seite des Stoßes (24) erstreckt und bevorzugt durch Schweißen sowohl an dem ersten als auch an dem und zweiten Bereich (8, 10) befestigt ist.

8. Fahrzeug nach einem der Ansprüche 4 bis 7, **dadurch gekennzeichnet, dass** es eine erste Verstärkung (18) umfasst, die sich in der Hauptsache vertikal zwischen der Auskleidung des Karosserieteils über dem Hinterrad und der Außenkarosserie quer zu dem Befestigungsteil und/oder Verstärkungsteil (6) erstreckt, bevorzugt in der Höhe der Öffnung (12), wobei die erste Verstärkung (18), das Befestigungsteil (6) und die Auskleidung durch elektrisches Schweißen zusammengefügt sind, wobei das elektrische Schweißen bevorzugt auf den drei Stärken ausgeführt wird, die von der Überlagerung der ersten Verstärkung (18), des Teils (6) und der Auskleidung gebildet werden.

9. Fahrzeug nach Anspruch 8, **dadurch gekennzeichnet, dass** es eine zweite Verstärkung (22) umfasst, die sich im Wesentlichen diagonal erstreckt und mit der ersten Verstärkung (18) in der Höhe des Befestigungsteils und/oder Verstärkungsteils (6) verbunden ist, wobei die erste Verstärkung (18), die zweite Verstärkung (22) und das Teil (6) durch elektrisches Schweißen zusammengefügt sind, wobei das elektrische Schweißen bevorzugt auf den drei Stärken ausgeführt wird, die von der Überlagerung der ersten Verstärkung, der zweiten Verstärkung und des Teils gebildet wird.

## Claims

1. A fixing and/or reinforcing part (6) for an anchoring means of a safety belt (4) to the quarter (2) of a vehicle, the part (6) forming a plate having a main direction with two opposite main ends and including an opening (12) intended to be passed through by the anchoring means, one of the main ends of the plate forms a shoulder (26) with a preferably generally planar attachment edge (16), such that the part (6) can be superimposed on a lining of the quarter (2) by having its attachment edge (16) in a junction recess (14) of the lining with a corresponding sheet of the outer body, **characterized in that** it includes first stiffening means (28) at the level of the opening and second stiffening means (30), said second stiffening means (30) extending at least substantially along the main direction between the opening (12) and the shoulder (26), said means preferably including at least one boss, more preferably at least one stamped part.

2. The part (6) according to claim 1, **characterized in that** the first stiffening means (28) at the level of the opening preferably include a boss, more preferably a stamped part, extending at least partially around the opening (12).

3. The part (6) according to one of claims 1 or 2, **characterized in that** it also extends transversely to the main direction of the height of the opening (12), along a transverse direction forming an angle of less than 20° with the perpendicular to the main direction, the opening (12) being preferably situated on a portion of the plate corresponding to the first third of its length starting from the main end opposite the attachment edge (16).

4. A vehicle with a quarter (2), including at the level of said quarter (2) a fixing and/or reinforcing part (6) for an anchoring means of a safety belt (4), **characterized in that** said part (6) is in accordance with one of claims 1 to 3.

5. The vehicle according to claim 4, **characterized in that** the lining and the corresponding sheet of the outer body are abutting at the level of their respective front edges forming the recess (14), the fixing and/or reinforcing part (6) fitting the lining with the attachment edge inserted in the recess and fixed to the recess by welding.

6. The vehicle according to one of claims 4 and 5, **characterized in that** the main direction of the fixing and/or reinforcing part (6) is oriented substantially along the longitudinal axis of the vehicle, the main direction and the longitudinal axis of the vehicle preferably forming an angle less than 45°, more preferably less than 30°, still more preferably less than 20°.

7. The vehicle according to one of claims 4 to 6, **characterized in that** the quarter lining includes a first, preferably upper, sheet (8), and a second, preferably lower, sheet (10), which are abutting, the fixing and/or reinforcing part (6) extends on either side of the joint (24) and is fixed, preferably by welding, to each of the first and second sheets (8, 10).

8. The vehicle according to one of claims 4 to 7, **characterized in that** it includes a first reinforcement (18) extending predominantly vertically between the quarter lining and the outer body, transversely to the fixing and/or reinforcing part (6), preferably at the height of the opening (12); the first reinforcement (18), the part (6) and the lining being assembled by electric welding, the electric welding being preferably realized on the three thicknesses formed by the superimposing of the first reinforcement (18), of the part (6) and of the lining.

9. The vehicle according to claim 8, **characterized in that** it includes a second reinforcement (22) extending substantially diagonally and connected to the first reinforcement (18) at the height of the fixing and/or reinforcing part (6), the first reinforcement (18), the second reinforcement (22) and the part (6) being assembled by electric welding, the electric welding being preferably realized on the three thicknesses formed by the superimposing of the first reinforcement, of the second reinforcement and of the part.
